Europäisches Patentamt

European Patent Office

Office européen des brevets

(19)

(11) Veröffentlichungsnummer: **0 244 392 B1**

# EUROPÄISCHE PATENTSCHRIFT

(45) Veröffentlichungstag der Patentschrift: **24.06.92**

(51) Int. Cl.⁵: **C21C 5/52**, F27B 3/10, F27D 17/00

(21) Anmeldenummer: **87890056.2**

(22) Anmeldetag: **23.03.87**

(54) Zelle für ein metallurgisches Gefäss.

(30) Priorität: **30.04.86 AT 1164/86**

(43) Veröffentlichungstag der Anmeldung:
**04.11.87 Patentblatt 87/45**

(45) Bekanntmachung des Hinweises auf die
Patenterteilung:
**24.06.92 Patentblatt 92/26**

(84) Benannte Vertragsstaaten:
**BE CH IT LI SE**

(56) Entgegenhaltungen:
**EP-A- 0 003 357
DE-B- 1 151 351
DE-B- 2 405 038
US-A- 4 395 023**

(73) Patentinhaber: **VOEST-ALPINE INDUSTRIEAN-
LAGENBAU GmbH
Turmstrasse 44
A-4020 Linz(AT)**

(72) Erfinder: **Moser, Peter
Sperlstrasse 3
A-4045 Linz(AT)**
Erfinder: **Weber, Alfred**
Luftenberg 229
A-4222 St. Georgen(AT)
Erfinder: **Aglas, Johann**
83e
A-4492 Hofkirchen(AT)
Erfinder: **Poperahatzky, johann**
Gruberstrasse 11
A-3363 Neufurth(AT)
Erfinder: **Stastny, Georg**
Luftenberg 236
A-4222 St. Georgen(AT)

(74) Vertreter: **Hübscher, Gerhard, Dipl.-Ing. et al
Patentanwälte Dipl.-Ing. Gerhard Hübscher
Dipl.-Ing. Helmut Hübscher Dipl.-Ing. Heiner
Hübscher Spittelwiese 7
A-4020 Linz(AT)**

**Beschreibung**

Die Erfindung bezieht sich auf eine Zelle für ein metallurgisches Gefäß mit horizontaler Kippachse, das einen abhebbaren und vom Gefäß wegschwenkbaren Deckel zur Beschickung mittels eines Chargierkorbes aufweist, der an einem außerhalb der Zelle angeordneten Chargierkran hängt und für den in einer Zellenwand eine verschließbare Chargieröffnung vorgesehen ist, von der weg sich in der Zellendecke eine ebenfalls verschließbare Durchtrittsöffnung für die Seile des Chargierkranes zumindest bis zur Mitte des Gefäßes erstreckt, zwischen dem und der Zellenwand mit der Chargieröffnung Raum zur Aufnahme des Chargierkorbes während des Öffnens und Schließens des Gefäßdeckels vorhanden ist.

Um die Umweltbelastung durch eine Rauchgasentwicklung beim Beschicken eines metallurgischen Gefäßes, insbesondere eines Elektroofens, zu begrenzen, ist es bekannt (Grubert, K.; Haering H.-U.; Marchand, D.; Muth, S.: Einsatz enger Elektroofen-Einhausungen zur Abgaserfassung und Lärmminderung, Stahl u. Eisen 104 (1984) Nr. 5, S. 235 bis 239), den Elektroofen in eine ihn umschließende Zelle einzusetzen, die zwischen dem Ofen und einer eine verschließbare Chargieröffnung aufweisenden Zellenwand Raum zur Aufnahme eines Chargierkorbes bietet, der mit Hilfe eines außerhalb der Zelle angeordneten Chargierkranes durch die Chargieröffnung in der Zellenwand in eine Wartestellung gebracht werden kann, um bei im wesentlichen geschlossener Zelle den Deckel des Ofens anheben und für die Beschickung vom Ofengefäß wegschwenken zu können, so daß die entstehenden Rauchgase innerhalb der Zelle abgesaugt werden können und die Chargieröffnung in der Zellenwand nur bei geschlossenem Ofendeckel geöffnet werden muß. Da sich der Chargierkorb in seiner Wartestellung auf der dem Ofenabstich gegenüberliegenden Ofenseite vor der Schlackentür des Ofens befindet, ist die Schlackentür nicht von außerhalb der Zelle zugänglich. Zur Bedienung des Ofens ist daher innerhalb der Zelle eine begehbare Bedienungskammer mit Pendeltüren zum Ofen hin vorgesehen, was nicht nur den Bauaufwand vergrößert, sondern auch eine Beeinträchtigung bei der Ofenbedienung mit sich bringt. Beim Vorsehen eines Gehänges zur Aufnahme des Chargierkorbes die mit vergleichsweise großem Abstand in Richtung der Kippachse des Elektroofens am Gehänge angreifenden Seile des Chargierkranes in der Zellendeckewäre eine von der Chargieröffnung in der Zellenwand ausgehende und zumindest bis zur Gefäßmitte reichende Durchtrittsöffnung erforderlich, deren Breite an den Abstand der Kranseile voneinander angepaßt werden müßte, so daß sich sowohl in der Wartestellung des Chargierkorbes als auch in der Beschickungsstellung eine vergleichsweise große Öffnung in der Zellendecke ergäbe, durch die entstehendes Rauchgas in die Gießhalle austreten könnte, selbst wenn die Durchtrittsöffnung für die Kranseile in der Zellendecke abschnittsweise verschlossen würde, um nicht eine über ihre gesamte Länge offene Durchtrittsöffnung in Kauf nehmen zu müssen.

Der Erfindung liegt somit die Aufgabe zugrunde, diese Mängel zu vermeiden und eine Zelle für ein metallurgisches Gefäß der eingangs geschilderten Art so zu verbessern, daß unter Wahrung der Vorteile ein Rauchgasaustritt aus der Zelle weitgehend vermieden und eine gute Zugänglichkeit zum Ofen von außerhalb der Zelle sichergestellt werden kann.

Die Erfindung löst die gestellte Aufgabe dadurch, daß sich die verschließbare Chargieröffnung in einer quer zur Kippachse des Gefäßes ausgerichteten Zellenwand befindet und daß die Durchtrittsöffnung in der Zellendecke für die in Richtung der Kippachse des Gefäßes mit Abstand hintereinander angeordneten Kranseile in Richtung dieses Kranseilabstandes verläuft.

Durch die Einbringung des Chargierkorbes in die Zelle in Richtung der Kippachse des Gefäßes wird eine Wartestellung für den Chargierkorb seitlich neben dem metallurgischen Gefäß ermöglicht, so daß die Zellenwand beispielsweise im Bereich der Schlackentür eines Ofens mit geringem Abstand vom Ofen angeordnet und der Ofen durch eine entsprechende Bedienungstür von außerhalb der Zelle bedient werden kann. Dazu kommt noch, daß sich das Gehänge des Chargierkranes aufgrund der Anordnung des metallurgischen Gefäßes innerhalb einer Geißhalle stets in Richtung der Kippachse des Gefäßes erstreckt und demnach auch die Kranseile in dieser Richtung mit Abstand voneinander an dem Gehänge angreifen. Um den Chargierkorb durch die Chargieröffnung in der quer zur Kippachse des Gefäßes verlaufenden Zellenwand in die Zelle einführen und über das Gefäß fördern zu können, ist folglich nur eine vergleichsweise schmale Durchtrittsöffnung für die in Abstandsrichtung hintereinander in die Durchtrittsöffnung eintretenden Kranseile erforderlich. Diese Durchtrittsöffnung mit dem auch bei der Aufhängung des Chargierkorbes an einem Gehänge kleinen Öffnungsquerschnitt vermeidet einen größeren Rauchgasaustritt, selbst wenn diese Durchtrittsöffnung über die gesamte Länge unabgedeckt bleibt. Im allgemeinen wird jedoch der Bereich der Durchtrittsöffnung für die Wartestellung oder die Beschickungsstellung abgedeckt werden, wenn sich der Chargierkorb in der jeweiligen anderen Stellung innerhalb der Zelle befindet.

Um auch geringe Rauchgasaustritte aus der Zelle mit einfachen Mitteln unterbinden zu können, können zumindest im Bereich des metallurgischen Gefäßes entlang der Durchtrittsöffnung in der Zellendecke Absaugöffnungen einer Absaugeinrichtung vorgesehen sein, so daß sonst durch die Durchtrittsöffnung entweichende Rauchgase abgesaugt werden können. Zusätzlich kann ein Rauchgasaustritt durch die im Bereich des Seilverlaufes nicht abdeckbare Durchtrittsöffnung dadurch ausgeschlossen werden, daß für die Durchtrittsöffnung in der Zellendecke zumindest im Bereich des metallurgischen Gefäßes ein Blasluftvorhang vorgesehen ist, der vorzugsweise mit der Absaugeinrichtung zusammenwirken kann und eine Blasluftströmung erzeugt, die die entstehenden Rauchgase zwangsläufig gegen die Absaugeinrichtung hin fördert.

In der Zeichnung ist der Erfindungsgegenstand beispielsweise dargestellt. Es zeigen

Fig. 1 eine erfindungsgemäße Zelle für ein metallurgisches Gefäß in einem Schnitt durch die Kippachse des Gefäßes,

Fig. 2 diese Zelle in einem Schnitt quer zur Kippachse des Gefäßes,

Fig. 3 eine Draufsicht auf die Zelle mit einem Chargierkorb in Wartestellung,

Fig. 4 eine der Fig. 3 entsprechende Draufsicht, jedoch mit einem Chargierkorb in Beschickungsstellung und

Fig. 5 eine Draufsicht auf eine Zelle mit einer anderen Abdeckung der Durchtrittsöffnung für die Kranseile in der Zellendecke.

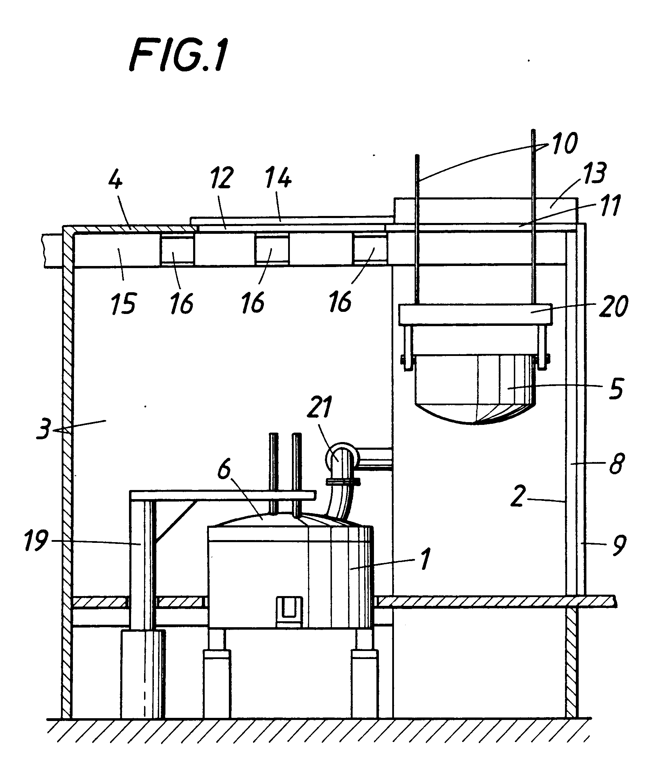

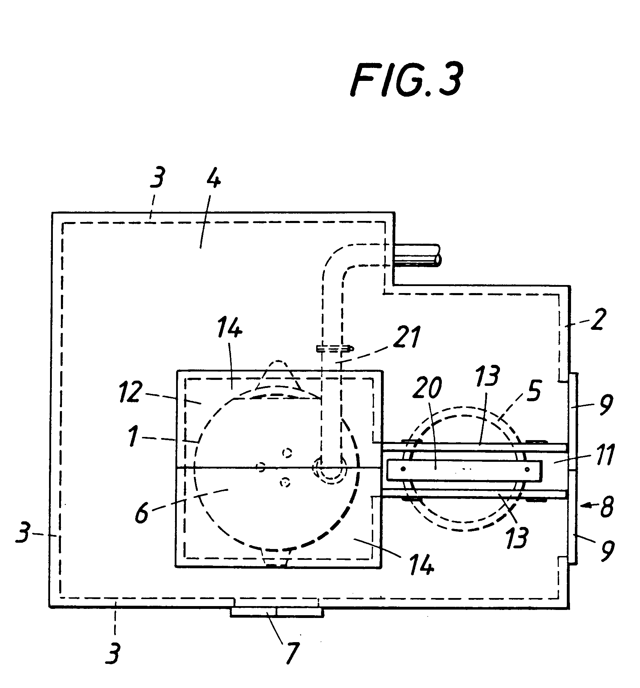

Die dargestellte Zelle für ein metallurgisches Gefäß 1 wird durch den Ofenraum umschließende Zellenwände 2 und 3 sowie eine Zellendecke 4 gebildet, wobei die Anordnung so getroffen ist, daß ein an einem nicht näher dargestellten, außerhalb der Zelle angeordneten Chargierkran hängender Chargierkorb 5 während des Öffnens und Schließens des Gefäßdeckels 6 in einer Wartestellung innerhalb der Zelle verbleiben kann, wie dies in den Fig. 1 und 3 dargestellt ist. Diese Wartestellung für den Chargierkorb 5 benötigt allerdings zwischen dem metallurgischen Gefäß 1 und der anschließenden Zellenwand 2 einen entsprechenden Raum, der die Bedienung des metallurgischen Gefäßes von außen her nicht beeinträchtigen soll. Aus diesem Grunde befindet sich die Wartestellung des Chargierkorbes 5 in Richtung der Kippachse des metallurgischen Gefäßes 1 seitlich neben diesem, so daß insbesondere bei Elektroöfen die Schlackentür von außerhalb der Zelle durch eine entsprechende Bedienungstür 7 in der Zellenwand 3 zugänglich bleibt. Der Chargierkorb 5 wird dabei in Richtung der Kippachse des metallurgischen Gefäßes 1 in die Zelle eingebracht, und zwar durch eine Chargieröffnung 8 in der senkrecht zur Kippachse des metallurgischen Gefäßes 1 verlaufenden Zellenwand 2. Diese Chargieröffnung 8 kann mit Hilfe eines zweiflügeligen Schiebetores 9 verschlossen werden.

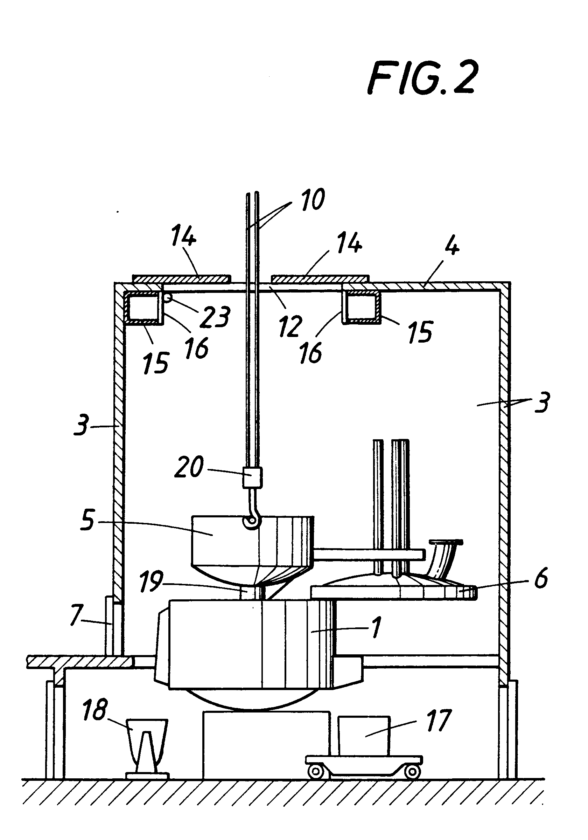

Für die Seile 10 des Chargierkranes ist in der Zellendecke 4 eine Durchtrittsöffnung 11 vorgesehen, die von der Chargieröffnung 8 in der Zellenwand 2 ausgeht und sich in den Bereich des metallurgischen Gefäßes 1 erstreckt. Im Bereich des metallurgisches Gefäßes 1 ist diese Durchtrittsöffnung 11 zu einer Montageöffnung 12 erweitert, durch die beispielsweise der Gefäßdeckel 6 ein- und ausgebaut werden kann. Die Durchtrittsöffnung 11 sowie die Montageöffnung 12 sind durch Verschlüsse 13 und 14 abdeckbar, so daß für das metallurgische Gefäß 1 eine geschlossene Zelle entsteht, in der das beim Beschicken des Gefäßes, beim Abstich oder bei einer Schlackenentnahme auftretende Rauchgas innerhalb der Zelle abgesaugt und eine Umweltbelastung außerhalb der Zelle vermieden werden kann. Die Absaugeinrichtung besteht im wesentlichen aus im Bereich der Zellendecke angeordneten Saugkanälen 15, die mit Absaugöffnungen 16 versehen sind. Wie sich aus der Fig. 2 erkennen läßt, befinden sich die Absaugöffnungen 16 insbesondere über der Abstichpfanne 17 und der Schlackenpfanne 18.

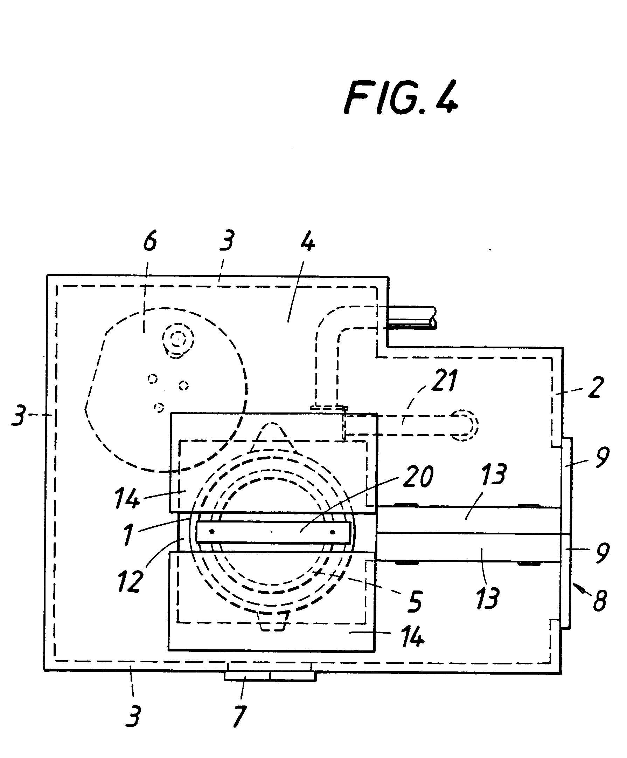

Soll das metallurgische Gefäß 1 mit Hilfe des Chargierkorbes 5 beschickt werden, so wird zunächst der Chargierkorb 5 durch die Chargieröffnung 8 mittels des Chargierkranes in die Zelle gefördert und nimmt innerhalb der Zelle eine Wartestellung gemäß den Fig. 1 und 3 ein. Nach dem Schließen des Schiebetores 9 kann der Gefäßdeckel 6 angehoben und über einen Schwenkarm 19 vom Gefäß 1 in eine Offenstellung weggeschwenkt werden, wie sie in den Fig. 2 und 4 angedeutet ist. Während des Öffnens des Gefäßdeckels 6 bleibt der Verschluß 14 für die Montageöffnung 12 geschlossen. Lediglich der Verschluß 13 in der Zellendecke 4 muß für den Durchtritt der Kranseile 10 offen bleiben. Dies spielt jedoch für den Rauchgasaustritt keine entscheidende Rolle, weil die Durchtrittsöffnung 11 vergleichsweise klein gehalten werden kann. In diesem Zusammenhang ist zu bedenken, daß selbst beim Vorsehen eines Gehänges 20 für den Chargierkorb 5 die mit Abstand an diesem Gehänge angreifenden Kranseile 10 keine breitere Durchtrittsöffnung 11 erfordern, weil sich das Gehänge 20 in Richtung der Kippachse des metallurgischen Gefäßes 1 erstreckt und daher die Kranseile 10 mit Abstand voneinander in dieser Richtung am Gehänge angreifen. Die Kranseile 10 werden daher bei einer Förderung des Chargierkorbes 5 in Richtung der Kippachse des metallurgisches Gefäßes 1 hintereinander in die Durchtrittsöffnung 11 eingeführt, die somit in einer Breite ausgeführt werden kann, wie sie sonst nur für ein Kranseil möglich ist.

Nach dem Öffnen des Gefäßdeckels 1 wird der Chargierkorb 5 aus seiner Wartestellung in die Beschickungsstellung über das Ofengefäß 1 gebracht, wie dies in den Fig. 2 und 4 angedeutet wird. Zu diesem Zweck muß der Verschluß 14 zumindest so weit geöffnet werden, daß die Kranseile 10 durch den entstehenden Öffnungsspalt zwischen den beiden Verschlußteilen hindurchgeführt werden können. Der Verschluß 13 für die Durchtrittsöffnung 11 kann während der Beschickung des Gefäßes 1 geschlossen werden. Nach der Gefäßbeschickung wird in umgekehrter Reihenfolge der Chargierkorb wieder in die Wartestellung gebracht, um den Gefäßdeckel 6 schließen zu können, bevor der Chargierkorb aus der Zelle gefördert wird.

Ist ein an den Gefäßdeckel 6 anschließbares Absaugrohr 21 vorgesehen, so kann dieses Absaugrohr 21 vor dem Öffnen des Deckels 6 aus der in Fig. 3 gezeichneten Stellung in die Stellung nach Fig. 4 geschwenkt werden, um freie Bahn für den Chargierkorb 5 zu schaffen. Es wäre aber auch möglich, das Absaugrohr 21 unbeweglich anzuordnen und den Deckel 1 von ihm wegzuschwenken, wobei der Chargierkorb 5 über das Absaugrohr 21 hinweg in die Beschickungsstellung gefördert werden muß.

Um die Durchtrittsöffnung 11 zu verschließen, kann der Verschluß 13 entweder aus zwei gegeneinander verschiebbaren Verschlußplatten oder aus zwei Verschlußklappen bestehen. In gleicher Weise ist es entweder möglich, den Verschluß 14 aus gegensinnig verschiebbaren Verschlußplatten zu bilden, die für die Beschickungstellung des Chargierkorbes lediglich um den Platzbedarf der Kranseile auseinander bewegt werden, oder im Stoßbereich der Verschlußplatten Verschlußklappen tragen, die für den Durchtritt der Kranseile aufgeklappt werden, ohne die Verschlußplatten selbst verschieben zu müssen. In den Fig.1 und 2 sind solche Verschlußklappen angedeutet.

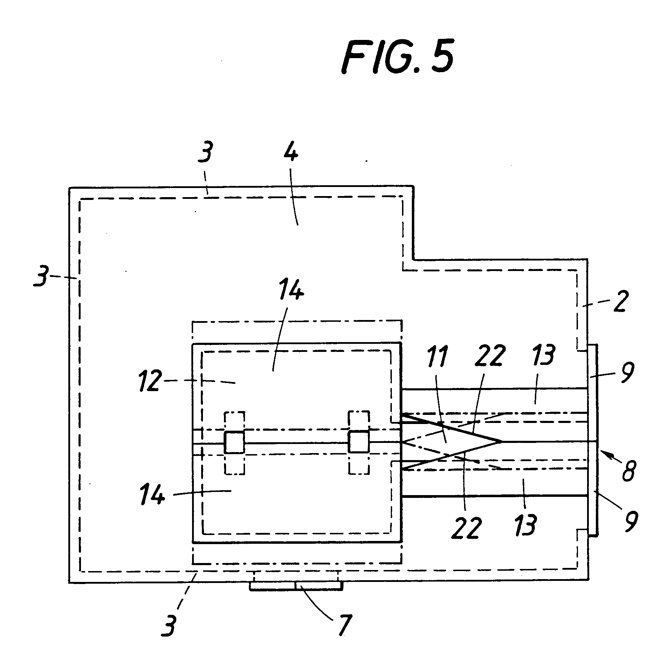

Da es darauf ankommt, einen Rauchgasaustritt aus der Zelle möglichst zu verhindern, ist darauf zu achten, daß nur die für die Kranseile notwendigen Bereiche der Durchtrittsöffnung 11 in der Zellendecke 4 unabgedeckt bleiben. Eine besonders vorteilhafte Ausführungsform eines Verschlusses 13 ergibt sich dabei gemäß Fig. 5 dadurch, daß die beiden den Verschluß 13 bildenden Verschlußplatten an ihren einander zugekehrten Verschlußrändern 22 gegengleich geneigt verlaufen, so daß die Durchtrittsöffnung 11 beim Übereinanderschieben der beiden Verschlußplatten 13 während der Förderung des Chargierkorbes 5 in die Beschickungsstellung im Ausmaß dieser Bewegung kontinuierlich verschlossen werden kann. In der Beschickungsstellung und in der Wartestellung kann die Durchtrittsöffnung 11 auch zwischen den Kranseilen 10 verschlossen werden, weil sich in diesen Stellungen keine Förderbewegung des Chargierkorbes 5 ergibt.

Damit die entstehenden Rauchgase nicht durch die Durchtrittsöffnung 11 im Bereich der Zellendecke 4 austreten können, sind die Absaugkanäle 15 mit den Absaugöffnungen 16 entlang dieser Durchtrittsöffnung bzw. entlang der Montageöffnung 12 angeordnet. Zusätzlich zu dieser Maßnahme kann auf einer Seite der Durchtrittsöffnung 11 eine Blasdüse 23 (Fig. 2) vorgesehen werden, die einen Blasluftvorhang quer zur Durchtrittsöffnung 11 bildet, wobei die Blasluft über die Absaugeinrichtung abgeführt werden kann. Dieser Blasluftvorhang lenkt entstehende Rauchgase gegen die Absaugeinrichtung hin um und verhindert einen Rauchgasaustritt aus der Zelle.

## Patentansprüche

1. Zelle für ein metallurgisches Gefäß (1) mit horizontaler Kippachse, das einen abhebbaren und vom Gefäß (1) wegschwenkbaren Deckel (6) zur Beschickung mittels eines Chargierkorbes (5) aufweist, der an einem außerhalb der Zelle angeordneten Chargierkran hängt und für den in einer Zellenwand (2) eine verschließbare Chargieröffnung (8) vorgesehen ist, von der weg sich in der Zellendecke (4) eine ebenfalls verschließbare Durchtrittsöffnung (11) für die Seile (10) des Chargierkranes zumindest bis zur Mitte des Gefäßes (1) erstreckt, zwischen dem und der Zellenwand (2) mit der Chargieröffnung (8) Raum zur Aufnahme des Chargierkorbes (5) während des Öffnens und Schließens des Gefäßdeckels (6) vorhanden ist, dadurch gekennzeichnet, daß sich die verschließbare Chargieröffnung (8) in einer quer zur Kippachse des Gefäßes (1) ausgerichteten Zellenwand (2) befindet und daß die Durchtrittsöffnung (11) in der Zellendecke (4) für die in Richtung der ffippachse des Gefäßes (1) mit Abstand hintereinander angeordneten Kranseile (10) in Richtung dieses Kranseilabstandes verläuft.

2. Zelle nach Anspruch 1 mit einer Abzugseinrichtung für Rauchgase im Bereich der Zellendecke (4), dadurch gekennzeichnet, daß zumindest im Bereich des metallurgischen Gefäßes (1) entlang der Durchtrittsöffnung (11) in der Zellendecke (4) für die Kranseile (10) Absaugöffnungen (16) der Absaugeinrichtung vorgesehen sind.

3. Zelle nach Anspruch 1 oder 2, dadurch gekennzeichnet, daß für die Durchtrittsöffnung (11) in der Zellendecke (4) zumindest im Bereich des metallurgischen Gefäßes (1) ein Blasluftvorhang vorgesehen ist.

**Claims**

1. A cell for a metallurgical vessel (1) having a horizontal trunnion axis and provided with a cover (6), which can be lifted off and is pivotally movable away from the vessel (1) and permits a charging by means of a charging basket (5), which is suspended from a charging crane that is disposed outside the cell and for which a charging opening (8), which is adapted to be closed, is provided in a wall (2) of the cell, wherein a through opening (11) for the ropes (10) of the charging crane extends in the top (4) of the cell at least as far as to the centre of the vessel (1), and a space for accommodating the charging basket (5) during the opening and closing of the cover (6) of the vessel is provided between the vessel wall (2) formed with the charging opening (8), characterized in that the charging opening (8) which is adapted to be closed is formed in a cell wall (2) which extends transversely to the trunnion axis of the vessel (1) and the through opening (11) formed in the top (4) of the cell and serving to receive the crane ropes (19), which are spaced apart in the direction of the trunnion axis of the vessel (1), extends in the direction in which said crane ropes are spaced apart.

2. A cell according to claim 1 provided adjacent to the top (4) of the cell with an offtake for flue gases, characterized in that suction openings (16) of the suction device are provided at least adjacent to the metallurgical vessel (1) along the through opening (11) provided in the top (4) of the cell for the crane ropes (10).

3. A cell according to claim 1 or 2, characterized in that a blast air curtain for the through opening (11) in the top (4) of the cell is provided at least adjacent to the metallurgical vessel (1).

**Revendications**

1. Cellule pour récipient métallurgique (51) à axe de basculement horizontal qui présente un couvercle (6) pouvant être soulevé et écarté du récipient par pivotement, pour l'approvisionnement réalisé au moyen d'un panier de chargement qui est suspendu à une grue de chargement agencée à l'extérieur de la cellule, et pour lequel il est prévu, dans une paroi (2) de la cellule, une ouverture de chargement obturable (8) d'où part une ouverture de passage (11), elle aussi obturable, donnant passage aux câbles (10) de la grue de chargement, et qui s'étend dans le plafond (4) de la cellule, au moins jusqu'au centre du récipient (1), cependant qu'entre ce récipient et la paroi (2) de la cellule qui présente l'ouverture de chargement (8), il existe de la place pour recevoir le panier de chargement (5) pendant l'ouverture et la fermeture du couvercle (6) du récipient, caractérisée par le fait que l'ouverture de chargement obturable (8) se trouve dans une paroi (2) de la cellule orientée transversalement à l'axe de basculement du récipient (1) et par le fait que l'ouverture de passage (11) pratiquée dans le plafond (4) de la cellule pour donner passage aux câbles (10) de la grue disposés l'un derrière l'autre à un certain écartement dans la direction parallèle à l'axe de basculement du récipient (1) s'étend parallèlement cet écartement des câbles de la grue.

2. Cellule selon la revendication 1, équipée d'un dispositif d'aspiration des gaz de fumées placé dans la région du plafond (4) de la cellule, caractérisée en ce qu'il est prévu, du moins dans la région du récipient métallurgique (1), le long de l'ouverture de passage (11) pratiquée dans le plafond (4) de la cellule pour donner passage aux câbles (10) de la grue, des ouvertures d'aspiration (16) qui font partie du dispositif d'aspiration.

3. Cellule selon la revendication 1 ou 2, caractérisée en ce qu'il est prévu un rideau d'air soufflé pour l'ouverture de passage (11) pratiquée dans le plafond (4) de la cellule, du moins dans la région du récipient métallurgique (1).

# FIG.1

# FIG.2

# FIG.3

# FIG.4

# FIG.5